# EUROPEAN PATENT APPLICATION

(11) **EP 3 869 391 A1**
(43) Date of publication of application: **25.08.2021**
(21) Application number: 20158523.9
(22) Date of filing: 20.02.2020
(51) Int. Cl.: G06K 9/00, G06F 21/31, G06K 9/32, G06K 7/14

(54) **SECURE FACIAL RECOGNITION**

(71) Applicant: Aletheaid Limited, London EC2A 2EW (GB)
(72) Inventor: WHITELAW, Lindsay, London, W2 3UW (GB); DORAN, Craig, London, SW1V 3PN (GB)
(74) Representative: Cupitt, Philip Leslie

(57) **Abstract**

A method of facial recognition comprises detecting (606) a visual cue (702) within an image (700), the visual cue having a predetermined appearance indicative of a registered user of a facial recognition system (100). A region (706) of the image that includes both the visual cue (702) and a face (705) is identified (608), and facial recognition is performed (620) only within the identified region.

## Description

The present disclosure relates to facial recognition.

Facial recognition is a technology that allows a person to be identified using their face. Facial recognition typically involves capturing an image of a face, extracting features of the face from the image, and comparing those features with features of known faces.

As facial recognition technology grows in popularity, concerns over the potential for its misuse have also grown. For example, there are concerns that facial recognition systems may capture and store images of people without their knowledge or consent. There are also concerns that facial recognition systems could be used to track the movement of people, without their knowledge or consent, in public or private spaces.

U.S. Patent No. 7,440,594 describes a face identification method that aims to protect the privacy of people other than a specific person. Images videotaped by surveillance cameras are captured in a computer, face images are detected therefrom, and the detected face images are compared with the face image of a specific person. When the detected face images do not match the face image of the specific person, a mosaic process is applied to the detected face images to protect the privacy of the people other than the specific person. Although this technique goes some way to protect privacy, it nevertheless relies upon facial recognition algorithms being performed on images of people who have not given their consent.

### Summary

The present disclosure provides methods and apparatuses for performing facial recognition on an opt-in basis.

In accordance with a first aspect, there is provided a computer-implemented method of facial recognition. The method comprises: detecting a visual cue within an image, the visual cue having a predetermined appearance indicative of a registered user of a facial recognition system; identifying a region of the image that includes both the visual cue and a face; and performing facial recognition within the identified region only.

In this manner, facial recognition is performed only on a registered user of the facial recognition system. The registered user can request facial recognition by presenting the visual cue to a camera of the facial recognition system, or deny permission for facial recognition by withholding the visual cue. Facial recognition is not performed on any other person who is within the image but not bearing a visual cue. The privacy of both registered users and non-registered persons is thus preserved, by performing facial recognition only on registered users who are bearing the visual cue. This can allow registered users and non-registered persons to avoid being tracked by facial recognition, for example.

A method in accordance with the present disclosure can also reduce the amount of processing that is performed by the facial recognition system, because the system does not perform a computationally intensive facial recognition process on every face within an image. Instead, the system performs a computationally simple process of detecting a visual cue, and performs facial recognition only when the visual cue has been detected.

The method may further comprise obtaining an identifier of a specific registered user of the facial recognition system, and using the identifier to retrieve facial data for the specific registered user. Performing facial recognition may comprise comparing facial data extracted from the image with the retrieved facial data. Use of an identifier for a specific user can further reduce the amount of processing that is performed by the facial recognition system, by avoiding the need to search through the entire corpus of registered users when performing facial recognition. Instead, the facial recognition system need only consider the user who is associated with the identifier.

Obtaining the identifier may further include extracting the identifier from the visual cue. Obtaining the identifier from the visual cue can improve the ability of the facial recognition system to perform facial recognition only on a registered user who has actively given their permission by presenting the visual cue.

The identifier need not be included in the visual cue. In other examples in accordance with the present disclosure, the identifier may be wirelessly communicated to the facial recognition system by a user's mobile device. Communicating the identifier wirelessly avoids the user's identifier being obtained by an unauthorised party that sees the visual cue. In yet other examples, the identifier may be formed by combining a first portion of the identifier that is extracted from the visual cue with a second portion of the identifier that is wirelessly communicated. Obtaining the identifier through a combination of the visual cue and wireless communication can avoid the user's identifier being obtained by an unauthorised party that intercepts the wireless communication.

The method may further comprise obtaining a decryption key of a specific registered user of the facial recognition system, and decrypting encrypted facial data for the specific registered user using the decryption key. Performing facial recognition may comprise comparing facial data extracted from the image with the decrypted facial data. The facial recognition system may store the facial data only in an encrypted form, so as to prevent an unauthorised party from using the facial data. Moreover, the facial recognition system itself may not possess the decryption key, thus preventing the operators of the facial recognition system from using the facial data in an unauthorised manner. In this manner, the facial recognition system can decrypt the encrypted facial data (and subsequently perform facial recognition) only when permitted to do so by a registered user providing their decryption key to the system.

Obtaining the decryption key may include extracting the decryption key from the visual cue. Obtaining the decryption key from the visual cue can improve the ability of the facial recognition system to perform facial recognition only on a registered user who has actively given their permission by presenting the visual cue

The decryption key need not be included in the visual cue. In other examples in accordance with the present disclosure, the decryption key may be wirelessly communicated to the facial recognition system by a user's mobile device. Communicating the decryption key wirelessly avoids the key being obtained by an unauthorised party that sees the visual cue. In yet other examples, the decryption key may be formed by combining a first portion of the decryption key that is extracted from the visual cue with a second portion of the decryption key that is wirelessly communicated. Obtaining the decryption key through a combination of the visual cue and wireless communication can avoid the key being obtained by an unauthorised party that intercepts the wireless communication.

The method may further comprise extracting a password from the visual cue, and using the password to retrieve facial data for the specific registered user. Performing facial recognition may comprise comparing facial data extracted from the image with the retrieved facial data. Obtaining the password from the visual cue can improve the ability of the facial recognition system to perform facial recognition only on a registered user who has actively given their permission by presenting the visual cue.

The password need not be included in the visual cue. In other examples in accordance with the present disclosure, the password may be wirelessly communicated to the facial recognition system by a user device. Communicating the password wirelessly avoids the key being obtained by an unauthorised party that sees the visual cue. In yet other examples, the password may be formed by combining a first portion of the password that is extracted from the visual cue with a second portion of the password that is wirelessly communicated. Obtaining the password through a combination of the visual cue and wireless communication can avoid the password being obtained by an unauthorised party that intercepts the wireless communication.

The visual cue may comprise a barcode. A barcode is computationally simple to detect, yet can convey additional information (such as an identifier, a decryption key and/or a password of a registered user) that can be used to perform facial recognition. The barcode may a one-dimensional or two-dimensional barcode, such as a QR code.

Alternatively or in addition, the visual cue may comprise a predetermined sequence of colours. A predetermined sequence of colours can be reliably detected even when the source of the colours is far from a camera of the facial recognition system. A predetermined sequence of colours can be detected using simple image processing operations and, therefore, may require even less computational resources than detecting a barcode. When the visual cue is a predetermined sequence of colours, detecting the visual cue may comprise identifying a plurality of pixels at a common location in each image of a series of images, wherein the colour values of each of the plurality of pixels represent each colour of the predetermined sequence of colours.

The visual cue may comprise both a barcode and a sequence of colours. For example, a barcode may be displayed on a screen, adjacent an area of the screen whose colour changes in accordance with the predetermined sequence.

Alternatively or in addition, the visual cue may comprise the user device itself. For example, the visual cue may comprise the appearance of the user device itself, and may optional comprise a barcode and/or a sequence of colours. Combining multiple types of visual cue can allow the visual cue to be detected more reliably.

Identifying a region of the image that includes both the visual cue and a face may comprise: performing an edge detection algorithm on the image to identify a plurality of edges in the image; and combining the plurality of edges to form one or more continuous lines that surround the visual cue, wherein each continuous line defines a respective candidate region of the image. Alternatively or additionally, identifying the region of the image may comprise: performing a foreground detection algorithm on the image to identify one or more foreground regions of the image; and selecting at least one foreground region that includes the visual cue as a candidate region of the image. Identifying the region of the image may further comprise performing a face detection algorithm within each candidate region to identify a candidate region that includes a single face.

A further aspect provides an apparatus configured to perform any of the methods disclosed herein. For example, the apparatus may comprise one or more processors in communication with a memory. The memory may comprise instructions which, when executed by the one or more processors, cause the apparatus to perform any of the methods disclosed herein.

A further aspect provides a computer program product comprising instructions which, when executed by a computer, cause the computer to perform any of the methods disclosed herein. Yet another aspect provides a computer-readable medium comprising instructions which, when executed by a computer, cause the computer to perform any of the methods disclosed herein.

### Brief Description of the Drawings

Embodiments will now be described, purely by way of example, with reference to the accompanying drawings, in which:
Figure 1 is a schematic diagram of a facial recognition system suitable for implementing the present disclosure;
Figure 2 is a schematic diagram of the user device shown in Figure 1;
Figure 3 is a schematic diagram of the terminal shown in Figure 1;
Figure 4 is a schematic diagram of the server shown in Figure 1;
Figure 5 is a flow diagram of a method of registering a user with a facial recognition system;
Figure 6 is a flow diagram of a first method of facial recognition in accordance with the present disclosure;
Figure 7 illustrates an image that includes a visual cue and a face;
Figure 8 illustrates detecting a region of the image of Figure 7 that includes both the visual cue and the face;
Figure 9 illustrates an image that includes a visual cue and two people;
Figure 10 illustrates detecting a region of the image of Figure 9 that includes the visual cue and the face of the person bearing the visual cue; and
Figure 11 is a flow diagram of a second method of facial recognition in accordance with the present disclosure;

### Detailed Description

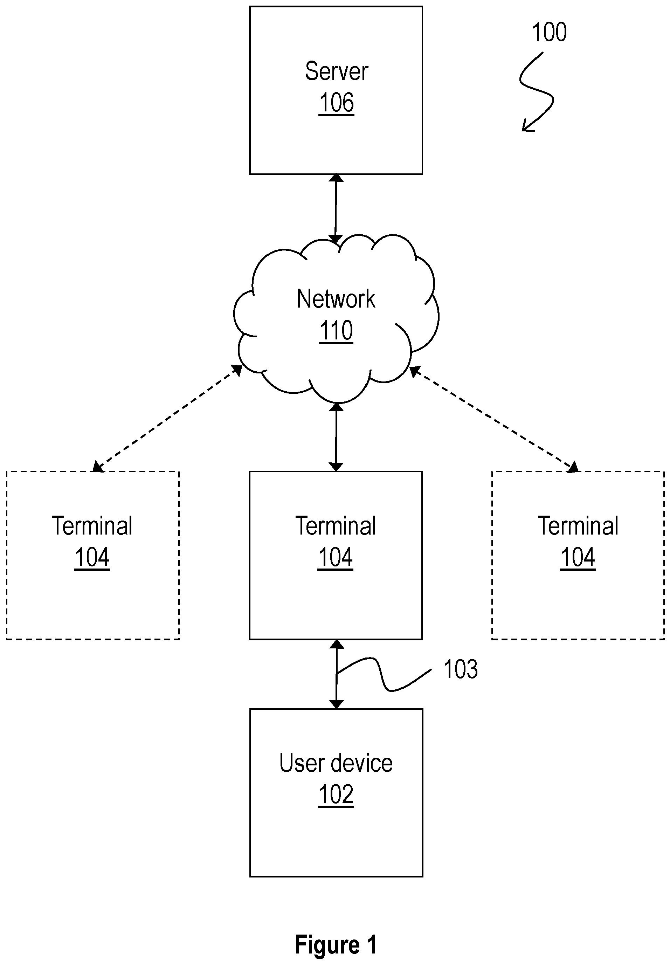

Figure 1 is a schematic diagram of an example of a facial recognition system 100 suitable for implementing a method of facial recognition in accordance with the present disclosure. As shown in Figure 1, the facial recognition system 100 includes one or more terminals 104 and a server 106. The terms "server" and "terminal" are intended only to facilitate identification, and should not be taken to imply any limitations or requirements on the form or capabilities of those devices. Although only one server 106 is shown in Figure 1, the disclosed functionality of the server 106 may be achieved by a plurality of servers. Such a plurality of servers may, or may not, be located at geographically distinct locations, and the disclosed functionality of the server 106 may be distributed between those servers in any suitable manner. Three terminals 104 are shown in Figure 1 for the sake of simplicity, but the facial recognition system 100 could have more or fewer terminals.

The functionality of a terminal 104 and a server 106 can combined in a single standalone device. For the sake of clarity, however, it will be assumed that the terminal 104 and server 106 are distinct entities throughout the following description. Nevertheless, the scope of the claims is intended to encompass implementations in which the functionality of both a terminal 104 and a server 106 is performed by a single entity, as well as implementations in which the terminal 104 and the server 106 are distinct entities, unless the context dictates otherwise.

The terminals 104 are configured to communicate with the server 106 via a network 110. The network 110 may include any type of wired and/or wireless data network, and may include the Internet.

The facial recognition system 100 may optionally include a user device 102. The user device 102 and terminal 104 may optionally communicate via a communication link 103. The communication link 103 is generally a short-range wireless communication link, such as a communication link that uses radio frequency, infrared, ultrasonic or audible communications. Non-limiting examples of technologies that may be used to implement a radio frequency wireless communication link 103 include Bluetooth™, ZigBee™, IEEE 802.11 (Wi-Fi™) and near-field communication (NFC). The communication link 103 may be a wired communication link, such as an electrical or optical fibre link. The use of a short-range wireless or wired communication link can help to ensure that both the user and the user device 102 are physically present at the terminal 104, and can thus reduce the risk of spoofing attacks against the facial recognition system 100.

The functionality of a user device 102 and a terminal 104 (and, optionally, a server 106) can combined in a single standalone device. For the sake of clarity, however, it will be assumed that the user device 102 and terminal 104 are distinct entities throughout the following description. Nevertheless, the scope of the claims is intended to encompass implementations in which the functionality of both a user device 102 and a terminal 104 (and, optionally, a server 106) is performed by a single entity, as well as implementations in which the user device 102 and the terminal 104 are distinct entities, unless the context otherwise dictates.

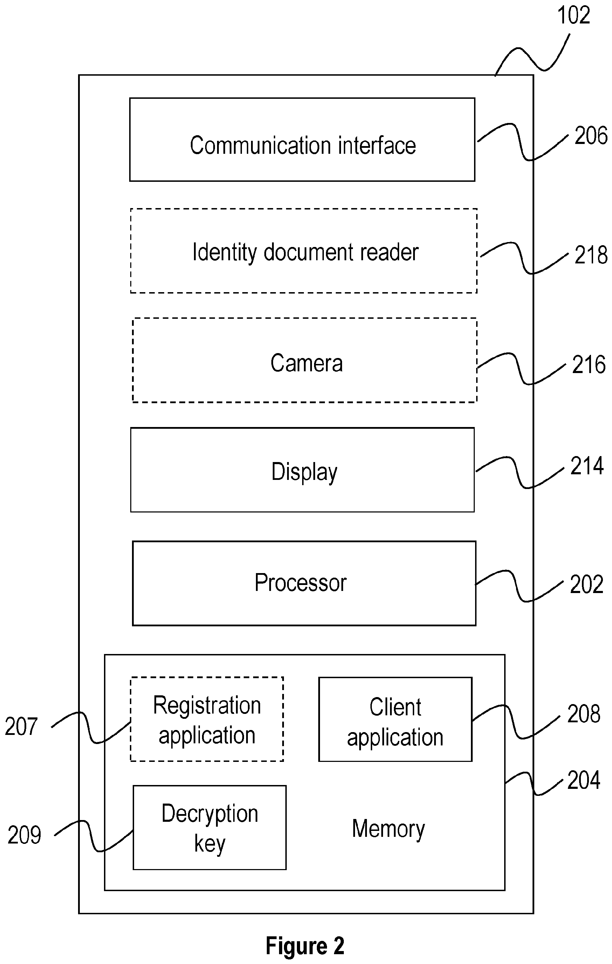

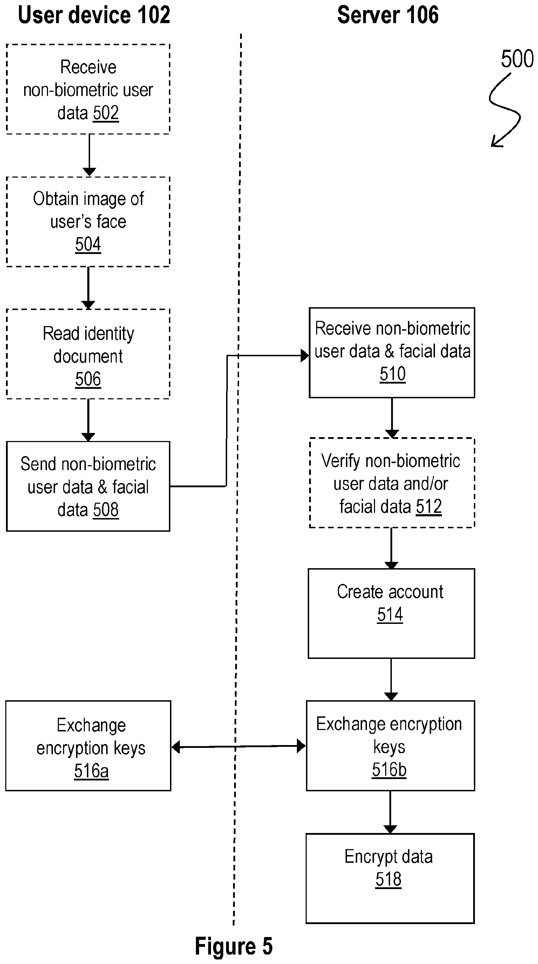

Figure 2 is a schematic diagram of a user device 102. The user device 102 may be any suitable type of computing device, such as a smartphone, tablet computer, laptop computer, desktop computer, smart television or a wearable device (e.g., a smartwatch). The user device 102 comprises a processor 202, a memory 204, a communication interface 206, and a display 214. The user device 102 may optionally comprise a camera 216 and/or an identity document reader 218, to allow the communication device 102 to perform the method of registering a user with the facial recognition system that is described below with reference to Figure 5.

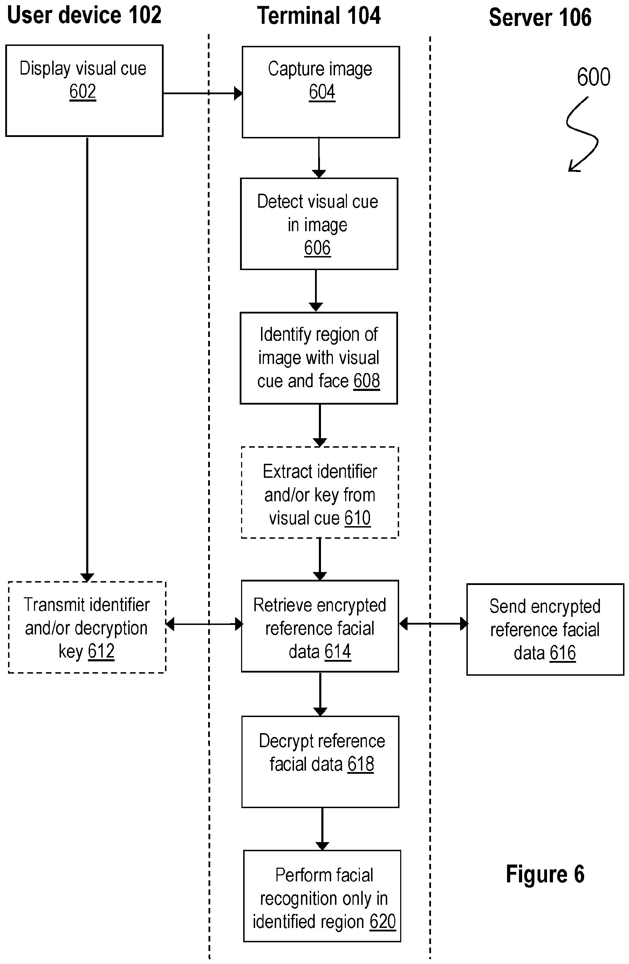

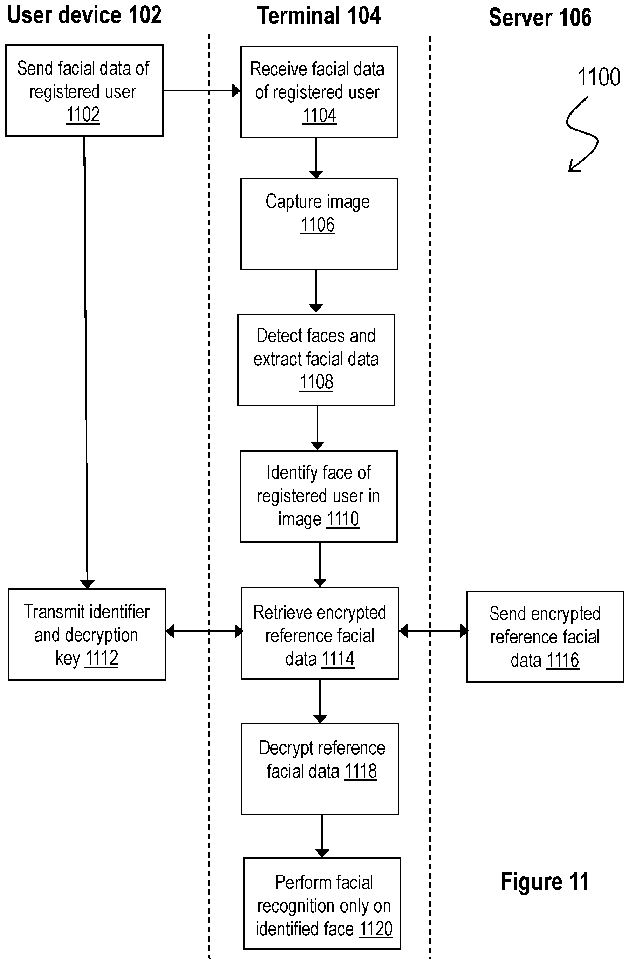

The processor 202 can be any suitable type of data processing device, such as a microprocessor, microcontroller or application specific integrated circuit (ASIC). The memory 204 can include a volatile memory, a non-volatile memory, or both volatile and non-volatile memories. The memory 204 stores a client application 208 and a decryption key 209. The client application 208 includes processor-executable instructions that, when executed by the processor 202, cause the user device 102 to perform either or both of the methods of facial recognition described below with reference to Figures 6 and 11. The memory 204 may optionally store a registration application 207. The registration application 207 includes processor-executable instructions that, when executed by the processor 202, cause the user device 102 to perform the method of registering a user with the facial recognition system that is described with reference to Figure 5.

The communication interface 206 can include any suitable type of interface that enables the user device 102 to communicate with a terminal 104 via the communication link 103. The communication interface 206 may also enable the user device 102 to communicate with the server 106 via the network 110 to perform the method of registering a user with the facial recognition system that is described with reference to Figure 5.

The display 214 can be any type of output device that is capable of displaying a visual cue. For example, the display 214 may include a liquid crystal display (LCD) screen or an organic light-emitting diode (OLED) screen. The display 214 may be a touchscreen to enable data input.

The camera 216 may be a two-dimensional camera or a three-dimensional (depth) camera, either of which may be capable of taking a photograph in the visible and/or infrared regions of the electromagnetic spectrum. Further, the camera 216 may be capable of taking multiple photographs (e.g., a video), which can allow the liveness of a user to be verified and thereby reduce the risk of the facial recognition process being circumvented.

The identity document reader 218 includes hardware and/or software that is capable of reading an identity document. In general, the capabilities of the identity document reader 218 are determined by the way in which data is stored on the identity document that is to be read. For example, if the identity document is a biometric passport (e.g., a passport complying with International Civil Aviation Organization Doc 9303 on Machine Readable Travel Documents), the identity document reader 218 can include a radio frequency identity (RFID) reader and a camera. In this example, the identity document reader 218 can be configured to control the camera 216 to capture an image of the machine readable zone (MRZ) of the passport, and to perform optical character recognition (OCR) in order to extract data from the MRZ. The identity document reader 218 can be further configured to control the RFID reader to read a digital image of the passport holder from an RFID chip on the passport, optionally using a key derived from data extracted from the MRZ. The identity document reader 218 may be capable of reading multiple types of identity document, and can include whatever hardware and/or software is needed to read such documents. Purely by way of example, and without limitation, the identity document reader 218 may alternatively or additionally be capable of reading an identity card (e.g., a national identity card issued by the government of a country) or a driving licence.

In some implementations of the present disclosure, the user device 102 may be a smart card. In such implementations, the user device 102 does not include a camera 216, identity document reader 218 or a registration application 207. The user device 102 also does not include a display 214, but instead includes a visual cue printed on the surface of the smart card in implementations that are capable of performing the method of facial recognition that is described below with reference to Figure 6. Smart card-based implementations of the user device 102 may otherwise function in substantially the same manner as other implementations. For example, the smart card may communicate with the terminal 104 via a radio frequency communication link (e.g., using an antenna in the smart card) or a wired communication link (e.g., using one or more electrical contacts on the surface of the smart card). The smart card may store and execute the client application 208 using a memory and processor of its integrated circuit (IC) chip, respectively.

In other implementations of the present disclosure, the user device 102 may be passive. For example, the user device 102 may be an object (e.g., a card, badge, book or sheet of paper) with a visual cue printed thereon. Passive implementations of the user device 102 clearly do not have the same functionality as implementations that have electronic components, but are nevertheless capable of supporting the method of facial recognition that is described below with reference to Figure 6.

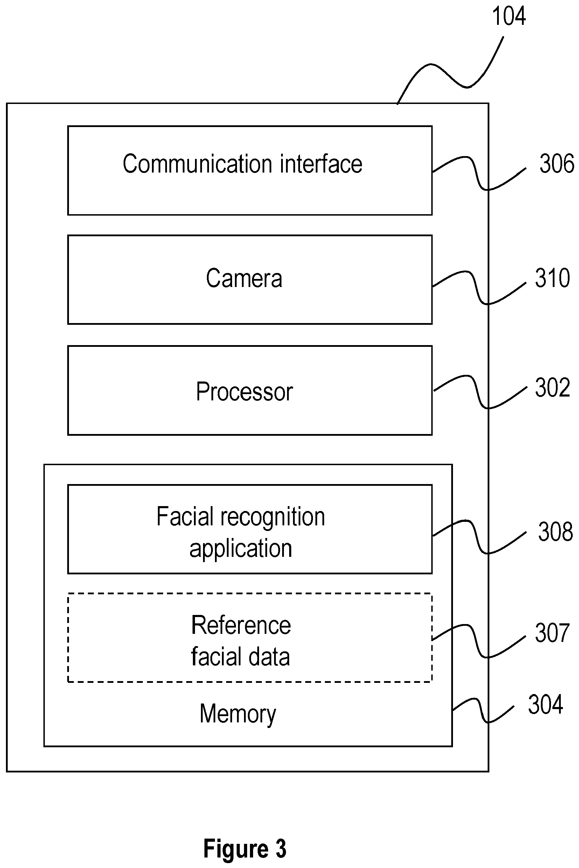

Figure 3 is a schematic diagram of the terminal 104. The terminal 104 can be any computing device that is capable of performing facial recognition. The terminal 104 comprises a processor 302, a memory 304, a communication interface 306, and a camera 310.

The processor 302 can be any suitable type of data processing device, such as a microprocessor, microcontroller or ASIC. The memory 304 can include a volatile memory, a non-volatile memory, or both volatile and non-volatile memories. The memory 304 stores a facial recognition application 308 and, optionally, reference facial data 307. The facial recognition application 308 includes processor-executable instructions that, when executed by the processor 302, cause the terminal 104 to perform either or both of the methods described below with reference to Figures 6 and 11. The communication interface 306 can include any suitable type of wired and/or wireless interface that enables the terminal 104 to communicate with the user device 102 via the communication link 103, and to communicate with the server 106 via the network 110.

The camera 310 may be a two-dimensional camera or a three-dimensional (depth) camera, either of which may be capable of taking a photograph in the visible and/or infrared regions of the electromagnetic spectrum. Further, the camera 310 may be capable of taking multiple photographs (e.g., a video), which can allow the liveness of a user to be verified and thereby reduce the risk of the facial recognition process being circumvented.

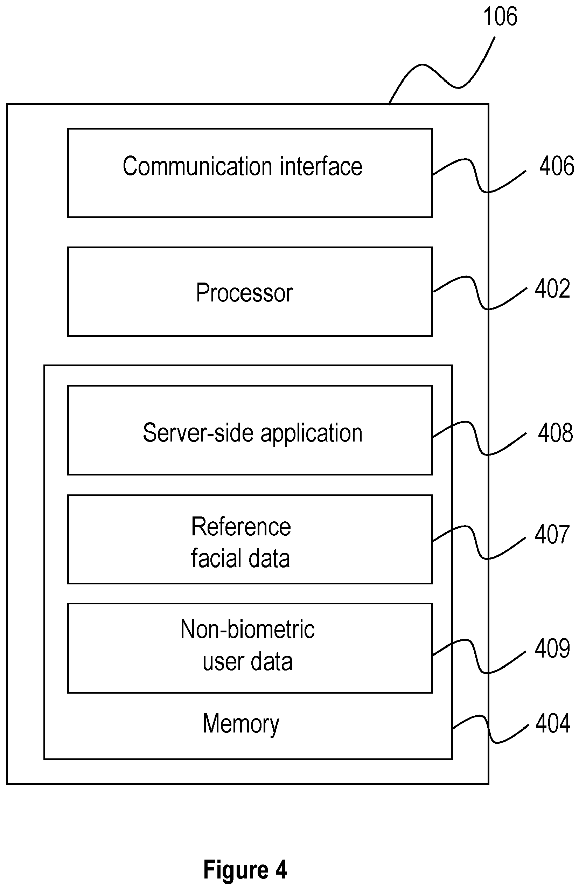

Figure 4 is a schematic diagram of the server 106. The server 106 can be any computing device that is capable of performing any or all of the methods that are described below with reference to Figures 5, 6 and 11. The server 106 comprises a processor 402, a memory 404, and a communication interface 406.

The processor 402 can be any suitable type of data processing device, such as a microprocessor, microcontroller or ASIC. The memory 404 can include a volatile memory, a non-volatile memory, or both volatile and non-volatile memories. The memory 404 stores a server-side application 408, reference facial data 407 and non-biometric user data 409. The server-side application 408 includes processor-executable instructions that, when executed by the processor 402, cause the server 106 to perform any or all of the methods of Figures 5, 6 and 11. The reference facial data 407 and non-biometric user data 409 may be stored in the memory 404 as a consequence of the server 106 performing the method of Figure 5. The communication interface 406 can include any suitable type of wired and/or wireless interface that enables the server 106 to communicate with the user device 102 and the terminal 104 via the network 110.

Figure 5 is a flow diagram of an example method 500 of registering a user with a facial recognition system 100 in accordance with the present disclosure. The purpose of the method 500 is to acquire reference facial data for a user. As used herein, the term "facial data" may refer to: an image that includes a face, or at least a part of a face; features extracted from an image of a face; or a combination thereof. As used herein, the term "reference facial data" refers to facial data that is treated as a ground truth when performing facial recognition.

The method 500 begins at block 502, in which a user device 102 receives non-biometric user data. The non-biometric user may include any one or more of the name, address, date of birth, place of birth, nationality, gender, telephone number and/or email address of the user. The user may enter (e.g., type) the non-biometric user data into the user device 102.

At block 504, the user device 102 obtains an image of the user's face. For example, the camera 216 may be used to take a photograph of the user's face. As another example, an image of the user's face may be selected from a set of one or more images stored on the user device 102.

At block 506, the user device 102 reads an identity document, such as a passport, driving licence or identity card. More specifically, the user device 102 uses the identity document reader 218 to read an identity document that identifies the user, so as to obtain non-biometric user data and/or facial data stored on the identity document. An advantage of obtaining non-biometric user data and/or facial data from an identity document is to improve the security and integrity of the facial recognition process. More specifically, data that has been obtained from an identity document can be assumed to be reliable because the user's identity has already been independently verified by the authority that issued the identity document. The use of an identity document can thus help to prevent a fraudster impersonating a user of the facial recognition system 100. The operations performed at block 506 depend on the manner in which data is stored on the identity document. For example, if the identity document is a biometric passport, block 506 may include capturing an image of the MRZ of the passport, performing OCR to extract data from the MRZ, deriving a key from data extracted from the MRZ, using the key to unlock the RFID chip on the passport, and receiving an image of the user's face from the RFID chip.

The method 500 may not include all of blocks 502, 504 and 506. For example, block 506 may be omitted, such that non-biometric user data is obtained solely at block 502 and facial data is obtained solely at block 504. As another example, blocks 502 and 504 may be omitted, such that the non-biometric user data and facial data is obtained solely from the identity document at block 506. As yet another example, block 504 may be omitted, such that non-biometric user data is obtained at block 502 (and, optionally, also at block 506) whilst facial data is obtained solely at block 506.

At block 508, the user device 102 sends the non-biometric user data and the facial data to the server 106. Then, at block 510, the server 106 receives the non-biometric user data and facial data. The non-biometric user data and facial data is sent and received via the network 110. The non-biometric user data and/or facial data can be encrypted prior to sending, so as to protect them in the event that communications between the user device 102 and the server 106 are intercepted.

The facial data may optionally be processed before being sent to the server. For example, an image obtained at block 504 or 506 may be processed to extract features of the user's face that allow the user to be uniquely identified (or identified with an acceptable level of certainty). For example, features such as the size, shape and position of the user's eyes, nose, mouth, jaw, cheekbones and/or ears may be extracted from the image. The facial data that is sent to the server 106 may include an image of the user's face, features extracted from the image, or a combination of both.

At block 512, the server 106 verifies the received non-biometric user data and/or facial data. The purpose of block 512 is to confirm that the received data is genuine. For example, verifying the received data may include checking that the data was obtained from a genuine identity document and/or checking that the data has not been altered. The operations performed at block 512 depend on the source of the received data, such as whether the data was obtained from identity document. For example, if the data to be verified is facial data obtained from a biometric passport, block 512 may include obtaining a public key of the authority that issued the passport, and using the public key to verify a digital signature associated with the facial data. If the received data is successfully verified at block 512, the method proceeds to block 514. Block 512 is optional.

At block 514, the server 106 creates an account for the user. The account may be a record, stored in the memory 404 of the server 106, which comprises information relating to the user. In particular, the account may include the non-biometric user data and/or the facial data that was received at block 510. Block 514 may include storing the received facial data as reference facial data 407 in the memory 404 of the server 106. Block 514 may also include storing the non-biometric user data 409 in the memory 404 of the server 106. The received facial data may optionally be processed to extract features of the user's face before being stored as reference facial data 407, as explained above. The reference facial data 407 may include an image of the user's face, features extracted from the image, or a combination of both.

As part of creating the account at block 514, the server 106 may assign an identifier to the user and, optionally, assign a password to the user. The identifier may be any sequence of characters (e.g., one or more ASCII characters, such as letters and/or numbers) that uniquely identifies the user. The password may also be a sequence of characters. The identifier may be used to identify the reference facial data 407 for a particular user, whilst the password may be used to control access to the user's reference facial data 407. The server 106 sends the identifier (and the password, if one is assigned) to the user device 102.

At blocks 516a and 516b, the user device 102 and server 106 exchange one or more encryption keys. For example, the user device 102 can generate a public and private key pair, and transmit the public key to the server 106. The user device 102 does not transmit the private key to the server 106, but instead stores the private key as decryption key 209 on the user device 102. Other cryptographic systems may be used.

At block 518, the server 106 encrypts the non-biometric user data 409 and/or reference facial data 407 using an encryption key that was exchanged at blocks 516a and 516b. For example, the server 106 can use the public key that was received from the user device 102 to encrypt the non-biometric user data 409 and/or reference facial data 407 that is stored by the server 106. The private key can be used to decrypt the reference facial data 409 during the facial recognition process that is described below with reference to Figure 6.

As noted above, the present disclosure is not limited to asymmetric (public key) cryptography, and other cryptographic systems may be used. However, whichever cryptographic system is used, it is desirable that the server 106 does not have access to a key that is needed to decrypt the stored non-biometric user data 409 and/or reference facial data 407. The risk of unauthorised use of the non-biometric user data 409 and/or reference facial data 407 is thereby reduced. Indeed, it is desirable that even the operator of the server 106 cannot use the non-biometric user data 409 and/or reference facial data 407 after it has been encrypted; instead, the non-biometric user data 409 and/or reference facial data 407 may only be decrypted using a key held by the user (such as the decryption key 209 stored on the user device 102).

Following the encryption of data at block 518, the method 500 ends. The user is thus registered with the facial recognition system 100. The user can subsequently be identified by facial recognition using the method 600 described below with reference to Figure 6 and/or the method 1100 described below with reference to Figure 11.

Figure 6 is a flow diagram of a first example of a method 600 of facial recognition. The method 600 begins at block 602, in which a visual cue is displayed by the user device 102. For example, the client application 208 can output the visual cue on the display 214 of the user device 102. In general, the visual cue is a visible symbol, pattern or object that can be detected by the terminal 104. To facilitate its detection by the terminal 104, the visual cue has a predetermined appearance. In other words, the form of the visual cue is chosen in advance, such that the terminal 104 knows what type of visual cue to detect when processing images captured by its camera 310. The presence of a visual cue in an image indicates to the terminal 104 that a registered user of the facial recognition system 100 is requesting facial recognition.

Purely by way of example, the visual cue may comprise a barcode. The barcode may be a one-dimensional barcode or a two-dimensional barcode. The two-dimensional barcode may be a quick response (QR) code, or any other suitable type of two-dimensional code. The barcode may optionally encode information for use by the terminal 104. More specifically, the barcode may encode any or all of: an identifier that uniquely identifies a specific registered user of the facial recognition system 100 (which is generally the person in possession of the user device 102); the decryption key 209; and/or a password. The information that is encoded in the barcode may optionally be encrypted, so as to prevent the information being intercepted by an unauthorised party. The information in the barcode may be encrypted using a one-time password, to prevent replay attacks in which an unauthorised party captures an image of the barcode with the intention of using that image as a visual cue.

As another example, the visual cue may comprise a predetermined sequence of colours. For example, a first colour may be displayed on the display 214 for a first period of time. A second, different, colour may be displayed 214 for a second period of time, where the second period of time starts immediately after the end of the first period of time. The sequence may comprise any number of colours, each of which may be displayed for a respective period of time that begins immediately after the end of the preceding period of time. The sequence of colours is known to both the user device 102 and the terminal 104, such that the terminal 104 can detect the visual cue by detecting the sequence of colours in images captured by its camera 310, as described in more detail below in connection with block 606. The colours may be displayed on the whole of the display 214, or a substantial portion thereof. The likelihood of the terminal 104 successfully detecting the visual cue is improved by increasing the size of the portion of the display 214 that is used to display the colours. A sequence of colours may be more easily and reliably detected than a barcode when there is a large distance between the camera 310 of the terminal 104 and the user device 102.

As yet another example, the visual cue may comprise the user device 102 itself. In this case, a user may indicate that they are a registered user of the facial recognition system 100 by holding the user device 102 within the field of view of the camera 310 of the terminal 104. This example is particularly suited to simple user devices 102 that lack a display 214, but could in principle be applied to other user devices 102.

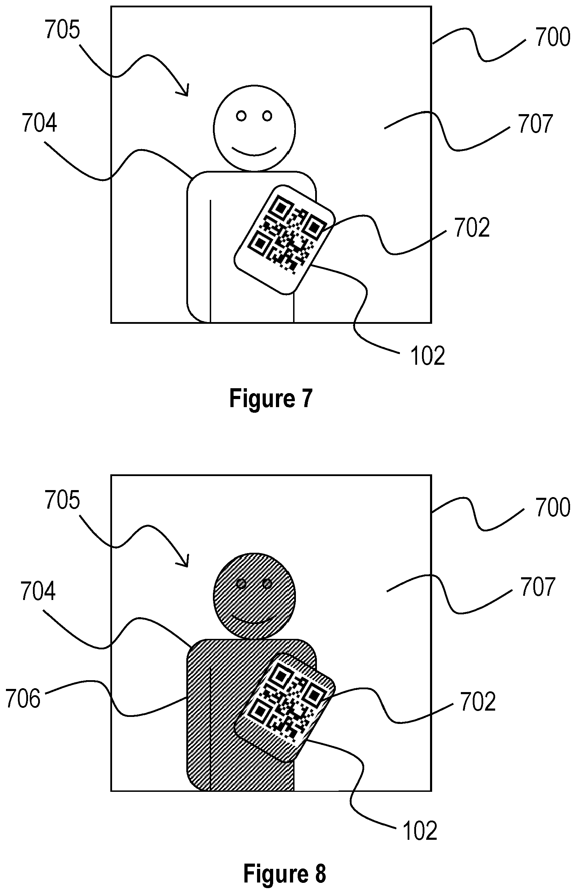

At block 604, the terminal 104 captures an image using its camera 310. Figure 7 shows a simplified example of an image 700 that may be captured at block 604. The image includes a face 705 of a person 704, a user device 102, a visual cue 702 displayed on the user device 102, and a background 707. In this example the visual cue 702 is a QR code but, as noted above, the visual cue 702 may take other forms.

At block 606, the terminal 104 tries to detect a visual cue 702 in the image 700. In other words, the terminal 104 processes the image 700 to determine whether a visual cue 702 is present. The operations performed at block 606 depend upon the form of the visual cue 702. If the visual cue 702 comprises a barcode, the visual cue can be detected using any of a number of suitable algorithms that are known in the art.

If the visual cue 702 comprises a sequence of colours, the terminal 104 processes a series of images 700 captured at block 604. Starting with the first image in the series, the terminal 104 processes the image 700 to try to identify a group of adjacent pixels whose colour values represent a colour in the sequence. For example, the terminal 104 may read the red, green, blue (RGB) colour values of each pixel in the image 700. If the terminal 104 identifies a plurality of adjacent pixels whose colour values are within a predetermined tolerance of a colour in the sequence, the location (e.g., the x-y coordinates) of the plurality of adjacent pixels is stored. The terminal 104 then processes the next image in the series, by determining whether the colour values of pixels at the stored location are within a predetermined tolerance of the same or next colour in the sequence. The process of analysing colour values of pixels at the same location is repeated for each image in the series, until the terminal 104 identifies a group of pixels whose colour values progress through each colour in the sequence of colours, in the order prescribed by the sequence. The visual cue 702 has then been detected.

If the visual cue 702 comprises the user device 102 itself, the terminal 104 may perform an object detection algorithm on the image 700 to detect an object whose appearance (e.g., shape, size and/or colour) matches the known appearance of the user device 102. The object detection algorithm may be supplemented by additional processing operations to disambiguate the user device 102 from other objects with a similar size, shape or colour. For example, the terminal 104 may detect a signal emitted by the user device 102, and use the signal to estimate the position of the user device 102 relative to the terminal 104. The signal may be a radio frequency signal (such as a Bluetooth™ low energy beacon) or an optical signal (such as a flashing light). The terminal 104 may estimate the position of the user device 102 by determining an azimuthal angle and/or an inclination angle at which the strength of the detected signal is greatest. As another example of processing operations to disambiguate the user device 102 from other objects, the camera 216 of the user device 102 may be used to capture an image having one or more datum points. The user device 102 sends the image to the terminal 104, whereupon the terminal 104 processes the image to detect the datum points and determine the position of the user device 102 relative to the datum points. The terminal 104 can then use the position of the user device 102 relative to the datum points to distinguish the user device 102 from a plurality of other objects having a similar appearance. The one or more datum points may include the camera 310 of the terminal 104, or one or more markers placed on or near the camera 310.

If the terminal 104 detects a visual cue 702 at block 606, the method proceeds to block 608. If the terminal 104 does not detect a visual cue 702, the image 700 is discarded and the method returns to block 604. More specifically, the image 700 is deleted (or otherwise prevented from being stored permanently) without facial recognition being performed. In this manner, the method 600 preserves the privacy of a person who does not request facial recognition by presenting a visual cue 702 to the camera 310.

With reference to Figure 8, at block 608 the terminal 104 identifies a region 706 of the image 700 that includes both the visual cue 702 and a face 705. The region 706 is indicated by shading in Figure 8. The aim of block 608 is to identify a contiguous group of pixels of the image 700 that include the face 705 of the person 704 who is bearing the visual cue 702, and which exclude the faces of any other people in the image 700. In this manner, facial recognition can subsequently be performed only on the person 704 who requests it by presenting the visual cue 702, whilst preserving the privacy of other people who are within the field of view of the camera 310. Block 608 can be performed using image processing techniques, two non-limiting examples of which are described in the following paragraphs.

A first example of an image processing technique for performing block 608 uses edge detection. Any suitable edge detection algorithm can be used. The image 700 is processed with an edge detection algorithm to identify a plurality of edges in the image. Some of the edges represent boundaries between the person 704 and the user device 102, and between the person 704 and the background 707. Depending on how the person 704 is holding the user device 102, some of the edges may represent boundaries between the user device 102 and the background 707. Other edges represent other features of the person 704, user device 102 and the background 707. A plurality of the detected edges are combined to form one or more continuous lines that surround the visual cue 702. The internal area defined by each continuous line, which encompasses the visual cue 702, is referred to as a "candidate region". Each candidate region is analysed to identify a candidate region that includes a single face. This can be achieved by processing each candidate region with a face detection algorithm to identify a region 706 that includes only one face 705.

The reader should take care to distinguish the terms "face detection" and "facial recognition" as used herein. Face detection is a process of identifying a region of an image that includes a face. Unlike facial recognition, face detection does not involve identifying a specific person. Accordingly, face detection does not impact upon the privacy of a person who wishes to avoid facial recognition.

A second example of an image processing technique for performing block 608 uses foreground detection. Any suitable foreground detection algorithm can be used, including algorithms that make use of depth information provided by a three-dimensional camera 310, and algorithms that identify the foreground in a two-dimensional image (or a series of two-dimensional images). The image 700 is processed with a foreground detection algorithm to label each pixel as a foreground pixel or a background pixel. The foreground detection algorithm thus identifies one or more foreground regions (i.e., groups of contiguous pixels that are labelled as foreground pixels). Each foreground region that includes the visual cue 702 is referred to as a "candidate region". Each candidate region is analysed to identify a candidate region that includes a single face. This can be achieved by processing each candidate region with a face detection algorithm to identify a region 706 that includes only one face 705.

A region 706 that includes both the visual cue and a single face is very likely to include the face 705 of the person 704 who is bearing the visual cue 702. The likelihood of identifying the region 706 correctly can be improved by combining the two above-mentioned examples of image processing techniques, although it will be appreciated the each of the image processing techniques can be used independently or in combination with other techniques not described herein.

In the event that block 608 does not identify a region that includes both the visual cue and a single face, the image 700 is discarded and method returns to block 604. and the method returns to block 604. More specifically, the image 700 is deleted (or otherwise prevented from being stored permanently) without facial recognition being performed. In this manner, the method 600 preserves the privacy of persons within the image 700 when a region of the image that includes only the person 704 bearing the visual cue 702 cannot be unambiguously identified.

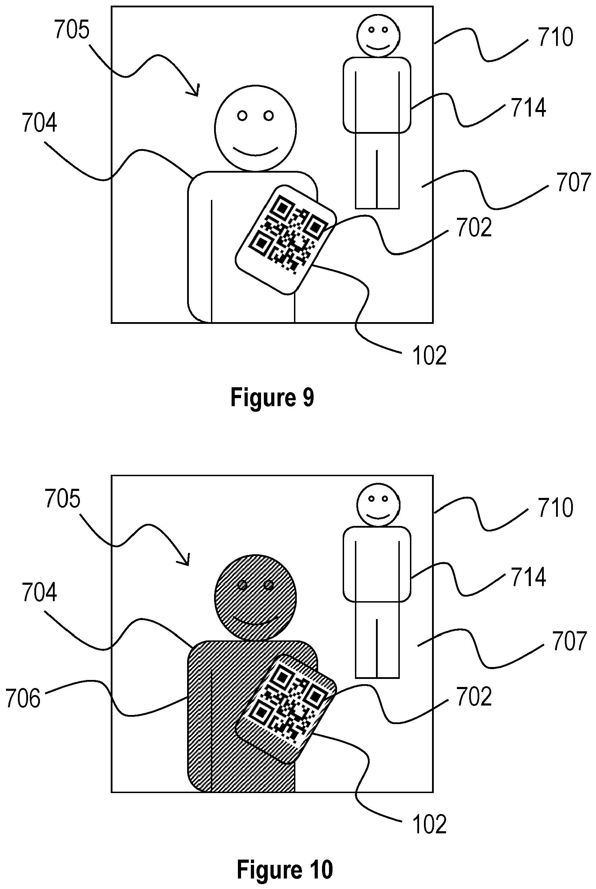

To further illustrate the results of block 608, Figures 9 and 10 show an image 710 that includes two people 704, 714. Person 704 requests facial recognition by bearing the visual cue 702. Person 714 does not wish to be the subject of facial recognition, and thus does not bear a visual cue. By identifying a region 706 of the image 710 that includes both the visual cue 702 and a single face 705, block 608 identifies a region of the image 710 that can be processed by a facial recognition algorithm in order to identify person 704 whilst avoiding performing facial recognition on person 714.

In order to perform facial recognition, it is necessary to have reference facial data 307, 407 against which facial data extracted from an image 700, 710 can be compared to identify a specific person 704. Blocks 610, 612, 614, 616 and 618 obtain reference facial data 307, 407 for the person 704 who presented the visual cue 702 to the camera 310. This enables one-to-one matching of facial data extracted from an image 700, 710 against reference facial data 307, 407 for that specific person 704. One-to-one matching requires less computational effort than comparing facial data extracted from the image 700, 710 against reference facial data 307, 407 for all registered users of the facial recognition system 100. Furthermore, blocks 610, 612, 614, 616 and 618 also allow matching to be performed when the reference facial data 307, 407 is stored in an encrypted form. Blocks 610, 612, 614, 616 and 618 will now be described in more detail.

At block 610, the terminal 104 extracts information from the visual cue 702. For example, the visual cue 702 may be decoded to extract information encoded therein. The information encoded in the visual cue 702 may include any or all of: an identifier that uniquely identifies a specific registered user of the facial recognition system 100; the decryption key 209; and/or a password. The information that can be extracted at block 610 depends on what information was encoded in the visual cue 702 that was displayed at block 602.

At block 612, the user device 102 transmits information to the terminal 104 via communication link 103. The information that is transmitted includes any or all of: an identifier that uniquely identifies a specific registered user of the facial recognition system 100; the decryption key 209; and/or a password. The terminal 104 receives the information from the user device 102 via the communication link 103.

Either one, or both, of blocks 610 and 612 may be performed. Extracting information from the visual cue 702 at block 610 has the advantage of allowing facial recognition to be performed only on a user who has actively requested facial recognition by presenting the visual cue 702 to the camera 310. Extracting information from the visual cue 702 also avoids the need for a communication link 103 between the user device 102 and the terminal 104, thus enabling those devices to be implemented using simpler hardware. Furthermore, extracting information from the visual cue 702 has the advantage that the information cannot be obtained by an unauthorised party that intercepts data transmitted via the communication link 103. On the other hand, receiving information from the user device 102 via the communication link 103 has the advantage that the information cannot be obtained by an unauthorised party that sees the visual cue 702. By performing both blocks 610 and 612, the risk of an unauthorised party obtaining all of the information can be reduced, which in turn reduces the risk of a replay attack against the facial recognition system 100. Blocks 610 and 612 may be combined in a variety of ways. For example, the user identifier may be extracted from the visual cue 702 at block 610, whereas the decryption key and/or password may be sent by the user device at block 612. As another example, a portion of the user identifier, decryption key and/or password may be extracted from the visual cue at block 610, whilst the remainder of the user identifier, decryption key and/or password may be sent by the user device at block 612; the terminal 102 may then combine the respective portions to form the whole of the user identifier, decryption key and/or password.

At block 614, the terminal 104 retrieves encrypted reference facial data 407. For example, the terminal 104 may send a message to the server 106, wherein the message requests that the server 106 sends reference facial data 407. The message includes the identifier of the user. The message may also include a password, if one was assigned to the user at block 514.

At block 616, the server 106 sends encrypted reference facial data 407 to the terminal 104. The server 106 may use the identifier from the message sent at block 614 to identify the account for a specific user. The server 106 may use the password from the message to access the encrypted reference facial data 407 from the identified user account. The server then sends the reference facial data 407, in an encrypted form, to the terminal 104. The terminal 104 receives the encrypted reference facial data 407 from the server 106.

At block 618, the terminal 104 decrypts the encrypted reference facial data that was retrieved at block 614. The decryption key that was obtained at block 610 and/or block 612 is used to decrypt the reference facial data. The decrypted reference facial data 307 may be stored in the memory 304 of the terminal 104

At block 620, the terminal 104 performs facial recognition within only the region 706 of the image 700 that was identified at block 608. Block 620 may include detecting a face 705 within the region 706, and then extracting features of the face 705 that allow the person 704 to be uniquely identified (or identified with an acceptable level of certainty). For example, features such as the size, shape and position of the user's eyes, nose, mouth, jaw, cheekbones and/or ears may be extracted from the region 706 of the image 700. The facial features extracted from the region 706 may then be compared with corresponding features of the reference facial data 307. The person 704 is positively identified if the facial features extracted from the region 706 are identical to (or within an acceptable tolerance of) the reference facial data 307. The person 704 is deemed not to have been identified if the facial features extracted from the region 706 are different from (or outside an acceptable tolerance of) the reference facial data 307. The background 707 that surrounds the region 706 is not processed at block 620, so as to avoid performing facial recognition on a person who is not bearing the visual cue.

When block 620 has been performed, the reference facial data 307 is permanently deleted from the memory 304 of the terminal 104. Security is thus improved by storing reference data 307 in an unencrypted form for the bare minimum time needed to perform facial recognition. Similarly, the image 700 is permanently deleted to preserve the privacy of any persons 714 within the image 700 other than the person 704 bearing the visual cue 702. However, optionally, the region 706 containing the face 705 of a person 704 who has been positively identified may be stored for future reference; in this case, the background 707 of the image 700 is permanently discarded.

There has thus been disclosed a first example of a method 600 that allows facial recognition to be performed only on a person 704 who requests it, whilst avoiding performing facial recognition on other persons 714.

Variations of method 600 are possible within the scope of the claims. In one variant, the method 600 is performed without a server 106. In this variant, block 614 involves retrieving encrypted reference facial data 307 from the memory 304 of the terminal 104, and block 616 is not performed.

In another variant of the method 600, facial recognition is performed at the server 106. This can reduce the processing requirements of the terminal 104. In this variant, the terminal 104 extracts the region 706 from the image 700, 710 (e.g., by cropping the image 700, 710 and/or setting the colour values of pixels outside the region 706 to a random or predetermined value), and sends only the region 706 to the server 106. This preserves privacy by preventing images of other persons 714 being sent to the server 106. The terminal 104 also sends the identifier of the user and the decryption key (and the password, if one is used) to the server 106. Blocks 618 and 620 are performed at the server 106, which sends a message to the terminal 104 to indicate whether the user was positively identified by facial recognition.

In yet another variant of the method 600, the terminal 104 and/or the server 106 may be configured to log requests for facial recognition in a distributed ledger. The distributed ledger may be, for example, a blockchain. The distributed ledger can provide an immutable record of when and/or where the user's reference facial data has been used. The distributed ledger may be inspected by the user, such that the user can see when and/or when their reference facial data was used.

Figure 11 is a flow diagram of a second example of a method 1100 of facial recognition. The method 1100 begins at block 1102, in which a user device 102 sends, to the terminal 104, facial data of a registered user of the facial recognition system 100. The facial data may have been previously captured using the camera 216 of the user device 102, or may have been stored in the memory 204 of the user device 102 in some other manner. The facial data is sent to the terminal 104 via the communication link 103.

In some implementations, block 1102 may be initiated by the terminal 104 broadcasting a signal. For example, the signal may be a beacon signal, such as a Bluetooth™ low energy beacon. The signal is configured to alert any user devices within range to the presence of the terminal 104. Upon receiving the signal, the user device 102 may execute the client application 208, which may ask the user whether they wish to send facial data to the terminal 104. If the user grants permission to the client application 208, the user device 102 sends the facial data to the terminal 104 at block 1102.

At block 1104, the terminal 104 receives the facial data of the registered user from the user device 102. The receipt of facial data from the user device 102 indicates to the terminal 104 that a registered user of the facial recognition system 100 is requesting facial recognition.

At block 1106, the terminal 104 captures an image using its camera 310. Figures 7 and 9 show a simplified example of images 700, 710 that may be captured at block 1106. The images 700, 710 were described above in connection with method 600, and may include the registered user of the facial recognition system 100 (indicated by reference sign 704) and one or more other persons 714. However, it should be noted that the captured image 700, 710 need not include a visual cue 702 to perform method 1100.

At block 1108, the terminal 104 detects one or more faces in the image 700, 710. For example, the terminal 104 may detect the faces using any suitable face detection algorithm. The terminal 1108 then extracts facial data from the image 700, 710 for each of the detected faces. The extraction of facial data may include extracting facial features such as the size, shape and position of the user's eyes, nose, mouth, jaw, cheekbones and/or ears.

At block 1110, the terminal 104 attempts to identify the face 705 of the registered user 704 in the one or more faces that were detected at block 1108. Specifically, the facial features extracted at block 1108 may be compared with corresponding features of the facial data that was received at block 1104. The face 705 of the registered user 704 is positively identified if the facial features extracted at block 1108 are identical to (or within an acceptable tolerance of) the corresponding features of the facial data that was received at block 1104. Positive identification at block 1110 does not mean that the user has been reliably identified, because the facial data received at block 1104 may not be genuine. Thus, if the face 705 of the registered user 704 is positively identified at block 1110, the method proceeds to block 1114 whereupon the face 705 of the registered user 704 is compared against ground truth reference facial data 307.

The face 705 of the registered user 704 is deemed not to have been identified if those facial features are different from (or outside an acceptable tolerance of) each other. In this case, the method returns to block 1106 in order to try to identify the registered user in another image captured by the camera 310.

Block 1110 may also include permanently deleting facial data that was extracted at block 1108 for any persons 714 other than the registered user 704. The facial data for those persons is never compared against the reference facial data 407 stored in the server 106 and, therefore, the facial recognition system 100 is unable to positively identify or track those persons. The image 700 itself may also be permanently deleted.

In this manner, the method 1100 preserves the privacy of a person 714 who does not request facial recognition by sending facial data to the terminal 104.

At block 1112, the user device 102 transmits information to the terminal 104 via communication link 103. The information that is transmitted includes an identifier that uniquely identifies the registered user of the facial recognition system 100 and the decryption key 209. The information that is transmitted may optionally also include a password. Block 1112 may optionally be combined with block 1102, such that the facial data and the other information are sent to the terminal 104 in a single transmission. The terminal 104 receives the information from the user device 102 via the communication link 103.

At block 1114, the terminal 104 retrieves encrypted reference facial data 407. For example, the terminal 104 may send a message to the server 106, wherein the message requests that the server 106 sends reference facial data 407. The message includes the identifier of the user. The message may also include a password, if one was assigned to the user at block 514.

At block 1116, the server 106 sends encrypted reference facial data 407 to the terminal 104. The server 106 may use the identifier from the message sent at block 1114 to identify the account for a specific user. The server 106 may use the password from the message to access the encrypted reference facial data 407 from the identified user account. The server then sends the reference facial data 407, in an encrypted form, to the terminal 104. The terminal 104 receives the encrypted reference facial data 407 from the server 106.

At block 1118, the terminal 104 decrypts the encrypted reference facial data that was retrieved at block 1114. The decryption key that was obtained at block 1112 is used to decrypt the reference facial data. The decrypted reference facial data 307 may be stored in the memory 304 of the terminal 104

At block 1120, the terminal 104 performs facial recognition on the face 705 that was identified at block 1110. Specifically, the facial features extracted at block 1108 may be compared with corresponding features of the reference facial data 307. The registered user is positively identified if the facial features extracted at block 1108 are identical to (or within an acceptable tolerance of) the corresponding features of the reference facial data 307. The registered user is deemed not to have been identified if the facial features extracted at block 1108 are different from (or outside an acceptable tolerance of) the reference facial data 307.

When block 1120 has been performed, the reference facial data 307 is permanently deleted from the memory 304 of the terminal 104. Security is thus improved by storing reference data 307 in an unencrypted form for the bare minimum time needed to perform facial recognition.

There has thus been disclosed a second example of a method 1100 that allows facial recognition to be performed only on a person 704 who requests it, whilst avoiding performing facial recognition on other persons 714.

Variations of method 1100 are possible within the scope of the present disclosure. In one variant, the method 1100 is performed without a server 106. In this variant, block 1114 involves retrieving encrypted reference facial data 307 from the memory 304 of the terminal 104, and block 1116 is not performed.

In another variant of the method 1100, facial recognition is performed at the server 106. This can reduce the processing requirements of the terminal 104. In this variant, the terminal 104 sends, to the server 106, only the facial features (as previously extracted from the image at block 1108) for a registered user 704 whose face 705 was positively identified at block 1110. This preserves privacy by preventing images or facial features of other persons 714 being sent to the server 106. The terminal 104 also sends the identifier of the user and the decryption key (and the password, if one is used) to the server 106.

In yet another variant of the method 1100, the terminal 104 and/or the server 106 may be configured to log requests for facial recognition in a distributed ledger. The distributed ledger may be, for example, a blockchain. The distributed ledger can provide an immutable record of when and/or where the user's reference facial data has been used. The distributed ledger may be inspected by the user, such that the user can see when and/or when their reference facial data was used.

The present disclosure can be applied in any situation where facial recognition is used. In a first use case, the present disclosure can be used to control access to a room or a building. In this use case, the camera 310 of the terminal 104 can be placed adjacent a door to the room or building. A user can request access to the room or building by presenting the visual cue 702 to the camera 310, or by sending their facial data to the terminal 104. The user can be permitted to enter the room or building if facial recognition is successful. Advantageously, this avoids facial recognition being performed on other persons 714 who are within the field of view of the camera 310.

In a second use case, the present disclosure can allow transactions to be authorised using facial recognition. In this use case, the camera 310 of the terminal 304 can be placed at a point of sale (POS) device. The terminal 304 may be incorporated within the point of sale device. The point of sale device can prompt the user to authorise a transaction (e.g., a payment) using facial recognition. In response, the user can present the visual cue 702 to the camera 310 or send their facial data to the terminal 104 (e.g., by executing the client application 208 on the user device 102), and facial recognition is performed. The transaction is authorised if facial recognition is successful. Advantageously, this avoids facial recognition being performed on other persons 714 who are within the field of view of the camera 310.

It will be understood that the invention has been described above purely by way of example, and that modifications of detail can be made within the scope of the claims. In particular, the sequence of operations shown in Figures 5, 6 and 11 is merely exemplary. Any of the operations shown in methods 500, 600 and/or 1100 may be performed in a different order that achieves substantially the same result.

Further examples of the present disclosure are enumerated below.
Example 1. A computer-implemented method of facial recognition, the method comprising:
   receiving, from a user device of a registered user of a facial recognition system, facial data of the registered user;
   using the received facial data to identify a face of the registered user in an image; and
   performing facial recognition on the identified face of the registered user.
Example 2. A method in accordance with Example 1, further comprising:
   detecting one or more faces in the image; and
   extracting facial data from the image for each of the one or more detected faces.
Example 3. A method in accordance with Example 2, wherein using the received facial data to identify a face of the registered user comprises:
   comparing the received facial data of the registered user with the extracted facial data of each of the one or more faces.
Example 4. A method in accordance with Example 3, wherein performing facial recognition on the identified face comprises:
   retrieving reference facial data of the registered user; and
   comparing the reference facial data of the registered user with the extracted facial data of the registered user.
Example 5. A method in accordance with Example 4, further comprising:
   receiving, from the user device, an identifier of the registered user;
   using the identifier to retrieve the reference facial data of the registered user.
Example 6. A method in accordance with Example 4 or Example 5, further comprising:
   receiving, from the user device, a decryption key of the registered user;
   and wherein retrieving reference facial data of the registered user comprises:
      retrieving encrypted reference facial data for the registered user; and
      decrypting the encrypted reference facial data user using the decryption key.
Example 7. A method in accordance with any of Examples 1 to 6, further comprising:
   permanently deleting the extracted facial data of faces other than that of the registered user.
Example 8. A method in accordance with any of Examples 1 to 7, further comprising:
   receiving the facial data of the registered user via a wireless communication link.
Example 9. A computer program product comprising instructions which, when executed by a computer, cause the computer to perform a method in accordance with any of Examples 1 to 8.
Example 10. A computer-readable medium comprising instructions which, when executed by a computer, cause the computer to perform a method in accordance with any of Examples 1 to 8.
Example 11. An apparatus configured to perform a method in accordance with any of Examples 1 to 8.

## Claims

1. A computer-implemented method of facial recognition, the method comprising:
detecting a visual cue within an image, the visual cue having a predetermined appearance indicative of a registered user of a facial recognition system;
identifying a region of the image that includes both the visual cue and a face; and
performing facial recognition within the identified region only.

2. A method in accordance with claim 1, further comprising:
obtaining an identifier of a specific registered user of the facial recognition system;
using the identifier to retrieve facial data for the specific registered user; and
wherein performing facial recognition comprises comparing facial data extracted from the image with the retrieved facial data.

3. A method in accordance with claim 2, wherein obtaining the identifier includes extracting the identifier from the visual cue.

4. A method in accordance with any of the preceding claims, further comprising:
obtaining a decryption key of a specific registered user of the facial recognition system;
decrypting encrypted facial data for the specific registered user using the decryption key; and
wherein performing facial recognition comprises comparing facial data extracted from the image with the decrypted facial data

5. A method in accordance with claim 4, wherein obtaining the decryption key includes extracting the decryption key from the visual cue.

6. A method in accordance with any of the preceding claims, further comprising:
extracting a password from the visual cue;
using the password to retrieve facial data for the specific registered user; and
wherein performing facial recognition comprises comparing facial data extracted from the image with the retrieved facial data.

7. A method in accordance with any of the preceding claims, wherein the visual cue comprises a barcode.

8. A method in accordance with any of the preceding claims, wherein the visual cue comprises a predetermined sequence of colours.

9. A method in accordance with claim 8, wherein detecting the visual cue comprises:
identifying a plurality of pixels at a common location in each image of a series of images, wherein the colour values of each of the plurality of pixels represent each colour of the predetermined sequence of colours.

10. A method in accordance with any of the preceding claims, wherein identifying the region of the image comprises:
processing the image with an edge detection algorithm to identify a plurality of edges in the image; and
combining the plurality of edges to form one or more continuous lines that surround the visual cue, wherein each continuous line defines a respective candidate region of the image.

11. A method in accordance with any of the preceding claims, wherein identifying the region of the image comprises:
processing the image with a foreground detection algorithm to identify one or more foreground regions of the image; and
selecting at least one foreground region that includes the visual cue as a candidate region of the image.

12. A method in accordance with claim 10 or claim 11, wherein identifying the region of the image further comprises:
performing a face detection algorithm within each candidate region to identify a candidate region that includes a single face.

13. A computer program product comprising instructions which, when executed by a computer, cause the computer to perform a method in accordance with any of the preceding claims.

14. A computer-readable medium comprising instructions which, when executed by a computer, cause the computer to perform a method in accordance with any of claims 1 to 12.

15. An apparatus configured to perform a method in accordance with any of claims 1 to 12.
